# EUROPEAN PATENT SPECIFICATION

(11) **EP 2 949 399 B1**
(45) Date of publication and mention of the grant of the patent: **18.10.2017**
(21) Application number: 14170040.1
(22) Date of filing: 27.05.2014
(51) Int. Cl.: B05B 13/02, B65G 47/22

(54) **Device for treating wooden articles**
Vorrichtung zur Behandlung von Holzartikeln
Dispositif de traitement d'articles en bois

(43) Date of publication of application: 02.12.2015
(73) Proprietor: CSP Engineering, 2480 Dessel (BE)
(72) Inventor: Peeters, Jan, 2480 Dessel (BE); Peeters, Rik Jef Lieven, 2480 Dessel (BE)
(74) Representative: V.O.

(56) References cited:
- US-A- 5 921 377

## Description

The present invention relates to a device for treating a pre-determined part of at least one elongated article, which device comprises an endless transport belt which is provided to revolve in a moving direction at a moving speed for moving the at least one elongated article positioned on a carrying surface of the transport belt from an insertion position to an application position in the device where the at least one article is to be treated, wherein the device comprises clamping means for fixing the position of the article with respect to the transport belt while being moved, according to the preamble of the first claim.

The present invention in particular relates to a device for treating the surface of at least one elongated wood article. More particularly, the present invention relates to a device for filling artifacts in the surface of at least one plank, having a surface made of wood.

Wood is a hard, fibrous structural tissue which finds numerous applications as a construction material, but also in flooring applications because of a.o. its aesthetic appearance, its haptics and insulating properties. In flooring applications often use is made of straight-edged flat rectangular boards or planks, produced from tree trunks or roots. Wood being a natural material, the surface of the planks may be irregular and may contain artefacts or imperfections, typically knots, cracks, holes etc. Although these imperfections form part of the natural aesthetic aspect of the wood, they may negatively impact the quality, especially when the surface is meant for use as a flooring surface. Knots and cracks may for example give rise to the formation of wood splinters which detach themselves from the remainder of the plank, which is unpleasant especially when the wood is used as a flooring material. Also, cracks may give rise to water infiltration.

To solve the problem of the presence of artifacts in the visible surface of planks, it has been proposed to fill the artifacts with a hot melt adhesive or a compound colored in the color of the wood. A device for filling defects present in the surface of wooden articles disclosed in EP2669017 comprises a transport belt with which planks are moved from an insertion position where the planks are positioned on the transport belt, to move the planks to an image capturing device for capturing an image of the surface of the planks. An image analyzing device connected to the image capturing devices carries out an analysis of the captured surface image to determine the position, shape and dimensions of artifacts, such as knots, cracks etc. Downstream of the image capturing device, the artifacts are filled with a filling compound which is applied by an applicator, which is moveable back and forth in longitudinal and cross direction of the plank. The applicator comprises a flat end part with an end face, which is provided to exert a downward pressure to the surface of the wooden article to fix the position of the article on the transport belt, and is moved over the article in contact with this surface. The application of the filling compound is controlled by a control unit, based on the data received from image analyzing device.

This known device however presents the disadvantage that while being moved through the device from the image capturing position to the position where the filling compound is applied, the position of the plank with respect to the transport belt may slightly change, so that the position at which the filling compound is applied does not exactly correspond to the position of the artifact. This may result in filling compound being applied to the top of the plank, with only part of the filling compound or even no being applied to fill the artifact. Manual correction may thus be required. This is laborious and time consuming and is unwanted in automated production processes for wooden articles. US5921377 discloses a conveyor system for circuit boards, said system comprising clamping means in the form of a plurality of abutment members that are movable along the conveyor belt. There is thus a need to a device in which the position of an elongated article, once positioned on a transport member for transporting the article through the device, remains the same with respect to that transport member.

The present invention therefore seeks to solve the problem of providing a device which permits to maintain the position of an article positioned on a transport member once this position has been determined, to the best possible extent, while the article is transported through the device.

This is achieved according to the present invention with a device showing the technical features of the characterizing portion of the first claim.

Thereto, the device of the present invention is characterized in that the clamping means comprise an upright rim which extends in upright direction along a first side of the carrying surface of the transport belt, along the entire surface of the transport belt, wherein the upright rim is moveable at a moving speed which corresponds to the moving speed of the transport belt, wherein the upright rim provides a positioning member for a first side of the elongated article contacting the upright rim, wherein the clamping means further comprise at least one pusher which is provided to exert a force to at least part of a second side of the elongated article opposite the first side contacting the upright rim, which force extends in a direction pointing from the second side of the elongated article towards the upright rim so as to clamp the at least one article between the at least one pusher and the upright rim.

The longitudinally extending upright rim forms a support edge for a first side of the elongated article that has been positioned on the transport belt and prevents the article from moving past that support edge in cross direction of the transport belt. The at least one pusher is provided to exert a force to a second side of the elongated article opposite the first side, which force extends from the second side of the elongated article contacting the pusher towards the upright rim, to clamp the article between the upright rim and the pusher, in particular to push the article towards and against the upright rim. The at least one pusher and the upright rim thereby co-operate to fix the position of the article crosswise of the moving direction of the transport belt, thus crosswise of the moving direction of the article. Since the upright rim is moveable at a moving speed which corresponds to the moving speed of the transport belt, the upright rim forms as it were one part with the transport belt, and the force pushing the elongated article against the upright rim, causes friction between the first side of the article and the contact face of the upright rim which contacts the first side of the article. Thus, the crosswise extending clamping force exerted to the elongated article by the co-operating upright rim and at least one pusher, and friction thereby created, ensure that any displacement of the at least one article with respect to the transport belt and upright rim is counteracted and that the position of the elongated article may be fixed with respect to the transport belt, in cross direction of the transport belt as well as in longitudinal direction.

Preferably, the at least one pusher is provided to exert a pushing force to at least part of the second side of the elongated article to push the at least one article against the upright rim, wherein the pushing force extends crosswise of the moving direction.

According to a preferred embodiment, the upright rim is connected to the transport belt so as to form one part with the transport belt. The upright rim may for example be made in one part with the transport belt.

The presence of a continuously revolvable transport belt which is capable of feeding elongated articles, for example planks, boards through the device in a continuous manner, permits achieving increased article throughput rates.

In order to prevent too high energy consumption, needed to overcome friction forces and to minimize heat built up on the second side of the at least one article which contacts the at least one pusher, the contact face of the at least one pusher which is provided to contact at least part of the second side of the elongated article, comprises means for permitting displacement of the article along the pusher in the moving direction, at low friction. Such low friction means are well known to the skilled person and may for example comprise a plurality of rotating wheels mounted to the pusher, wherein the wheels are arranged in a row which extends in the moving direction of the article, wherein the wheels are provided to rotate around a rotation axis substantially perpendicular to the moving direction of the article, wherein each of the said wheels has a tread which provides a running surface for the at least one article when being moved on the carrying surface of the transport belt. As the article is entrained by the transport belt, the moving direction of the article will correspond to the moving direction of the transport belt.

The position of the at least one pusher in the moving direction of the transport belt is preferably fixed and the transport belt is moved with respect to the at least one pusher, to minimize the risk that the position of the article with respect to the transport belt would vary by the action of the at least one pusher. The position of the at least one pusher crosswise to the moving direction of the transport belt may be fixed or may be variable to permit accommodation of articles with different dimensions in cross direction of the transport belt. In particular, the at least one pusher may be moveable in cross direction of the moving direction of the transport belt, between a retracted position where the at least one pusher does not contact the second side of the elongated article, and a contact position where the contact face of the pusher contacts at least part of the second side of the elongated article and is capable of exerting a clamping force.

Preferably, the device comprises a plurality of pushers positioned adjacent to each other in the moving direction of the transport belt. Segmentation into a plurality of pushers permits reducing the pushing force that needs to be exerted by each individual pusher to achieve the desired positioning, and thereby achieve a clamping force that is sufficiently high to guarantee that the position of the elongated article with respect to the transport belt may be fixed and maintained. Segmentation into a plurality of pushers also permits to achieve a homogeneous pushing force distribution along the length of the clamping means and it may be ensured that the pushing force at the position where an elongated article is inserted into the device or leaves the device, and the pushing force at the position where the filling material is applied, may be the same or may be different. According to a preferred embodiment, the pushing force exerted by the at least one pusher is adjustable, more preferably the pushing force exerted by each of the pushers is individually adjustable to be the same or different.

To permit accommodating local variations of the width of the article, in cross direction thereof or in cross direction of the moving direction, the at least one pusher is preferably tiltable with respect to the moving direction *M*. This permits tilting of the position of the contact face of the pusher with respect to the corresponding contact face on the article, i.e. the second side of the article, for example to accommodate small variations in the width of consecutive articles being moved through the device.

In order to minimize the risk that the position of the at least one article in cross direction of the transport belt would vary, it is preferred that the risk to deformation of the upright rim is minimized, also in the situation where a clamping force, in particular a pushing force, is exerted to the article by the at least one pusher, pointing towards the upright rim. According to a preferred embodiment this risk to deformation may be minimized by the choice of a material with a high stiffness for the upright rim. According to another preferred embodiment, the risk to deformation may be minimized by the presence on a second side of the upright rim opposite the first side facing the at least one elongated article, of a resistance which is provided to contact at least part of the second side of the upright rim. By counteracting deformation of the upright rim in a direction C along the direction of the clamping, in particular the pushing force, displacement of the elongated article may be counteracted. The upright rim is provided to be moveable with respect to the resistance at low friction.

The device of the present invention is particularly suitable for use within a unit for repairing defects occurring in the surface of an elongated article, in particular an elongated article made of wood, for example a wooden floor plank

The present invention is further elucidated in the appending figures and description of the figures.
Figure 1 shows a view to an end part of the device of the present invention.
Figure 2A shows a top view to the clamping means of the device of the present invention. Figure 2B shows a top view to the clamping means of the device of the present invention with some of the pushers in the retracted position.

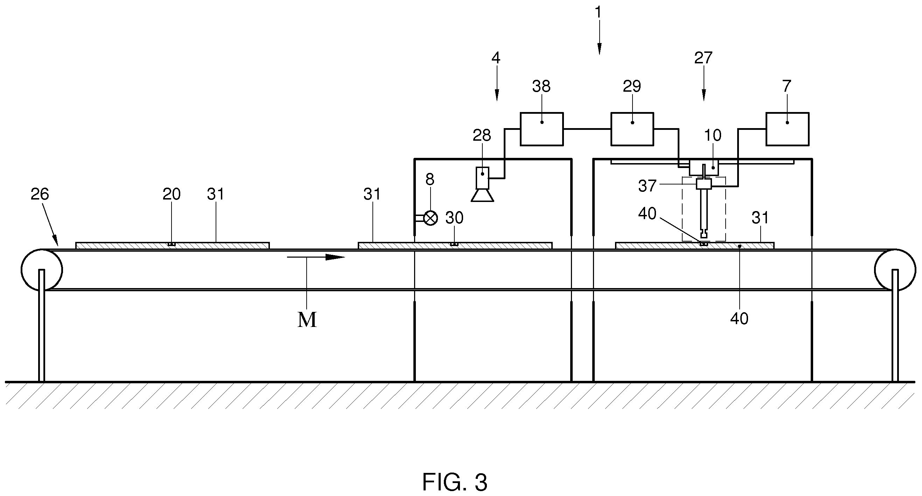

Figure 3 shows a view to a side of the device of this invention.

The device of the present invention is generally meant for moving elongated articles from one position to another position on a transport belt and thereby ensure that there is a minimal risk that the position of the article deviates from the intended position of the article on the transport belt. The device of the present invention is particularly meant for moving elongated articles made of wood, which comprise at least one artifact to be repaired or treated from an insertion position 26 where the articles are positioned on the transport belt, towards an image capturing position with an image capturing device 28 for capturing an image of the upper surface of the article to be treated, and an image analyzing device 38 where the image of the upper surface 31 of the article 20, 30, 40 is analyzed out to determine the position, shape and dimensions of artifacts 24, 34 present in the surface. Examples of artifacts are knots, cracks etc.

The image capturing device 28 is connected to an image analysis 38 device for analyzing the picture captured of the surface of the article, in particular on the position, size and shape of the artifacts and providing these data to a control unit 29. The control unit 29 is connected to at least one applicator 37 and is provided to control application of filling material into the artifacts 24, 34 based on the data received from the image analyzing device. The applicator is positioned at the application position 27 downstream of the image capturing device 28.

From the image capturing position 28, the articles 20, 30, 40 are moved by the transport belt 1 to an application position 27 where the artifacts are treated by a processor or applicator 37, based on the data collected by the image capturing device. For example, at the application position the artifacts may be filled with a filling compound, for example a hardening filler comprising wood particles, which may resemble the nature of the wood of which the surface of the article is made.

The device of this invention may comprise one or more applicators 37. Preferably the one or more applicators are moveable over the surface of the article to be treated, in longitudinal and cross direction of the transport belt.

The position at which the filling material is applied by the applicator 37 is determined by processing the captured image data, taking into account the displacement of the articles from the image capturing position 28 to the applicator 37 at the application position 27. Thus, it is important that the position of the artifacts 24, 34 assumed by the control unit 29 and applicator 37, is coherent with the captured image data and the displacement of the article 20, 30, 40 through the device as calculated by the control unit 29. Thereby it is important that the position of the artifacts, and thus the position of the at least one article 20, 30, 40 with respect to the transport belt 1 is not changed after the article has passed the image capturing device 28, as this could lead to the treatment of an aberrant part of the article by the applicator or to no treatment of the artifact at all. The presence of clamping means in the device of the present invention which prevent the articles from being moved with respect to the transport belt, solve this problem.

The applicator 37 may comprise a nozzle surrounded by a flat end part with an end face, which is moveable over the surface of the article, in longitudinal direction of the transport belt, as well as in cross direction. The flat end part is arranged to exert a downward pressure to the upper surface of the article, in a direction pointing towards the transport belt, and contributes to fixing the position of the article with respect to the transport belt.

The device of the present invention is in particular suitable for use with an applicator for filling defects present in the surface of wooden articles, in particular wooden floor planks, such as the one disclosed in EP2669017.

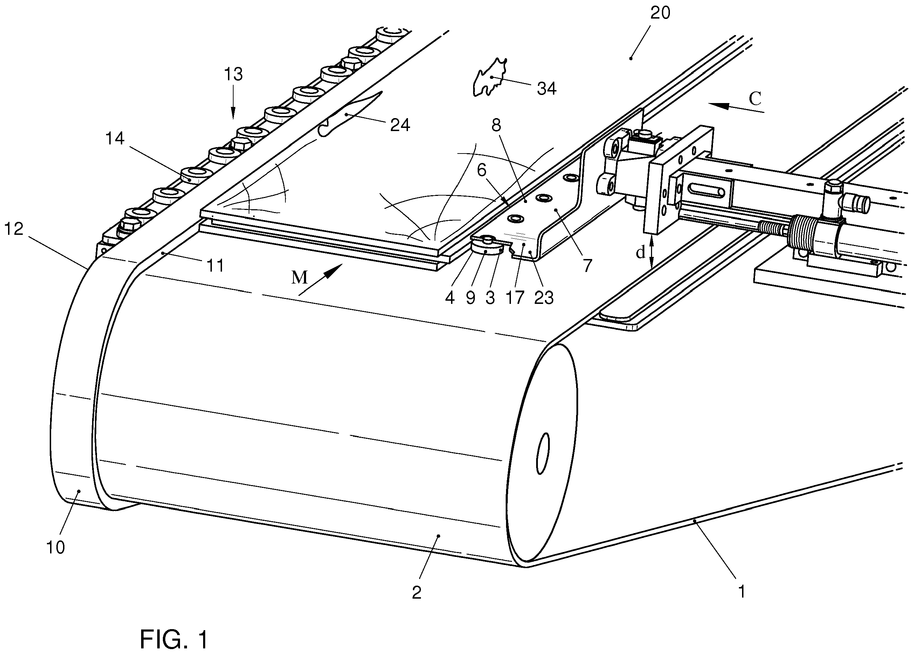

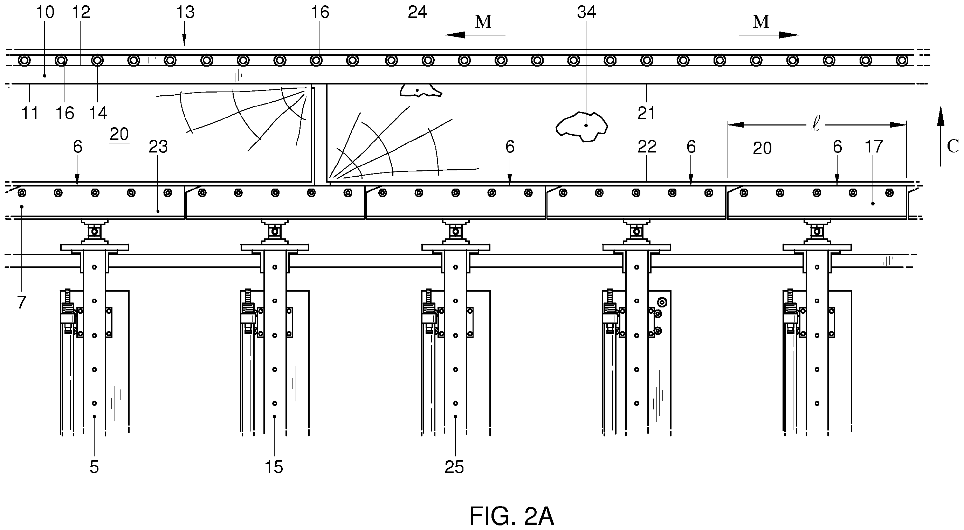

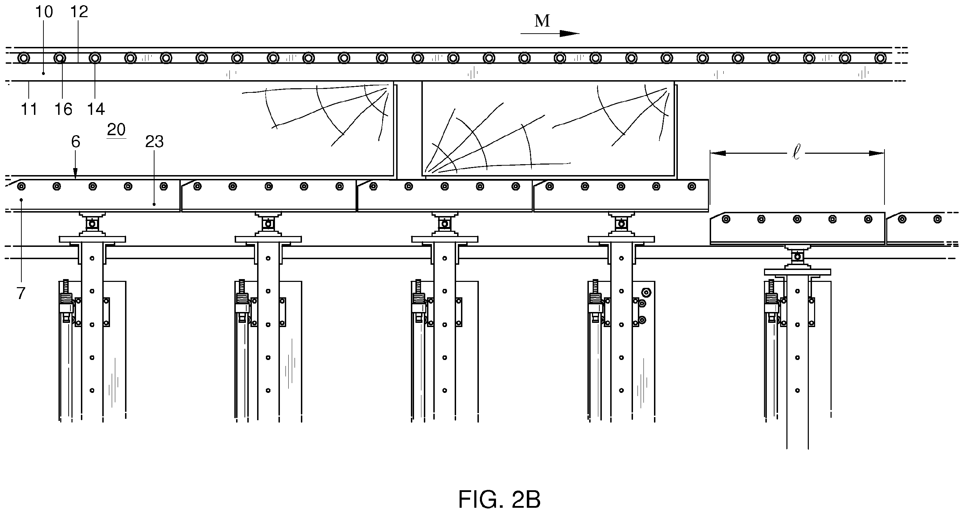

The device shown in figure 1, 2A and 2B comprises an endless looped transport belt 1, which is driven by a driving mechanism (not shown) to revolve in a moving direction, for example in a longitudinal direction indicated by the arrow M in fig. 2. The transport belt 1 is often driven by two or more pulleys or drums, with an endless loop of the transport belt rotating around the pulleys. The driving mechanism may involve one or both of the pulleys.

Depending on the nature of the article to be transported, transport belt 1 may be made of a wide variety of materials. The skilled person will be capable of selecting the appropriate material taking into account the nature of the articles to be transported. Examples of materials suitable for use as a transport belt include a band made of synthetic material for example rubber, a net or mesh made of synthetic material or of metal, but other materials considered suitable by the skilled person may be used as well. The nature of the transport belt is not an essential feature of the invention, and any transport belt considered suitable by the skilled person may be employed.

Transport belt 1 comprises a carrying surface 2 onto which the articles to be transported are positioned. The device of this invention comprises clamping means 10, 11, 5, 15, 25 which permit to fix the position of the article with respect to the transport belt, in the moving direction, usually the longitudinal direction of the transport belt, as well as crosswise of the moving direction, usually the cross direction of the transport belt.

The clamping means comprise an upright rim 10 which extends in longitudinal direction of the transport belt 1, and in upright direction with respect to the carrying surface 2 of the transport belt.

The upright rim 10 is moveable at a moving speed which corresponds to the moving speed of the transport belt 1 and provides a positioning member for a first side 21of the elongated article contacting the upright rim. To achieve this, the upright rim 10 is preferably connected to the transport belt 1 so as to form one part or one unity with the transport belt 1. This permits achieving that the upright rim 10 is moved with the transport belt 1 at the same speed, as one unity. The upright rim 10 may be mounted to the carrying surface 2, it may be attached to a longitudinal side of the transport belt, or it may be made in one part with the transport belt. The upright rim may however also be formed as a separate part which is moved synchronously with the transport belt.

The upright rim 10 may be made as one continuous upright rim, or it may be segmented. A continuous rim may have a particularly shaped upper part, for example a crenellated upper part. The upright rim 10 extends along the entire length of the transport belt 1, although it may extend along certain parts of the transport belt 1 only. This may be relevant in case articles will always be positioned on the transport belt in the same way, and an open space is to be left between successive articles. A continuous upright rim 10 may be preferred to minimize the risk to changing the position of an elongated article with respect to the transport belt in cross direction to the transport belt, but also crosswise to the moving direction *M* of the transport belt. A segmented upright rim 10 may be preferred to facilitate bending of the transport belt 1 at the position of the pulleys. The upright rim 10 may be made of the same material as the transport belt or of a different material. The upright rim may for example be made of metal, of fibrous reinforced plastic material, or of a synthetic material. The material is preferably chosen such as to have a high rigidity an negligible deformation when subjected to pressure following the clamping force exerted to the elongated article by the one or more pushers. Suitable synthetic materials include rigid polyurethane, polyesters for example polyamide, polyolefins for example polyethylene. Those materials are well known to the skilled person and they are readily commercially available. When an article is carried by the transport belt, the upright rim 10 will however usually extend at least from the image capturing position to the application position where filling material is applied, included. The upright rim 10 may for example extend at least from the image capturing device 28 to the application position 27 where filling material is applied to the artifacts, included.

The upright rim 10 provides a support edge for a first side 21 of an elongated article 20, 30, 40 positioned on the transport belt 1. Thus, the upright rim may function as a positioning member or reference for a first side 21 of the elongated article 20, 30, 40 on the transport belt by positioning the article in such a way that it contacts the upright rim 10 with its first side 21. The upright rim prevents the article from moving past the position of the upright rim in cross direction of the transport belt 1, or crosswise to the moving direction *M* of the transport belt. Thereby, the first side 21 may be a short side of the elongated article 20, 30, 40 or a longitudinal side of the elongated article, a bottom face or a top face, depending on the nature of the elongated article and the face that needs to be treated. Examples of articles to be handled by the device of the present invention include wooden articles such as wall planks, paneling, wooden profiles, window or door frames, windowsills, panels, boards, etc.

The clamping means preferably also comprise at least one pusher 5, 15, 25. The at least one pusher 5, 15, 25 is provided to exert a force to at least part of a second side 22 of the elongated article opposite the first side 21 contacting the upright rim 10, which force extends in a direction pointing from the second side 22 of the elongated article towards the upright rim 10 to position the at least one article 20, 30, 40 against the upright rim 10. In a preferred embodiment, the at least one pusher 5, 15, 25 is provided to exert a pushing force to a second side 22 of the elongated article 20 opposite the first side 21 positioned adjacent the upright rim 10 and supported by it, to push the elongated article 20, 30, 40 against the upright rim. The pushing force preferably extends in the direction of the arrow C, i.e. crosswise to the moving direction of the transport belt 1. With "crosswise" is meant that the pushing force may extend under a substantially right angle to the moving direction of the transport belt 1. However, within the framework of the invention "crosswise" includes pushing forces which extend under an angle smaller than or larger than 90° as well. An angle which is different from 90° to the moving direction may for example be applicable in case the second edge 22 of the elongated article does not run parallel to the longitudinal moving direction of the transport belt 1.

In stead of a pushing force, the skilled person may use any other equivalent force. An example of an equivalent force is a drawing force, drawing the at least one article towards the upright rim 10.

The clamping means of this invention may comprise one single pusher. In that case the pusher will usually have a length which corresponds to the distance between the image capturing device 28 and the application position 27. Planks for wooden floors typically have a length from 1-6 m, so the length of the pusher may be the same as the length of a plank or be larger or smaller. According to another preferred embodiment of the invention, a plurality of consecutive pushers is mounted along the distance between the image capturing device 28 and the application position 27 included. Consecutive pushers 5, 15, 25 may be positioned adjacent to each other or at some distance from each other. The distance between consecutive pushers 5, 15, 25 may be the same or different, but is preferably the same to ensure a uniform force distribution along the contact side 22 of the elongated article. Consecutive pushers may have a different length in the moving direction of the transport belt, preferably though they have the same length. The dimension or length *l* (see fig. 2A and 2B) of the pusher in longitudinal direction of the transport belt 1, in particular the length of the contact face of the pusher provided to contact the article, may be adapted to the length of the elongated articles in longitudinal direction of the transport belt 1. Usually the dimension of the pusher in longitudinal direction of the transport belt 1 will be smaller than the length of the elongated article. A pusher may for example have a length of 20 -50 cm, but pushers having a shorter or longer length may be used as well. The skilled person will be capable of selecting the appropriate length, taking into account the length of the articles to be transported and the clamping force to be exerted by each pusher to achieve appropriate fixation of the position of the article. The presence of a plurality of adjacent pushers ensures that a plurality of pushers 5, 15, 25 cooperate in the positioning of the elongated article against the upright rim 10, and that a uniform pushing force distribution over the length of the second side 22 of the elongated article 20, 30, 40 may be achieved. A uniform pushing force distribution is particularly important when a next elongated article 20, 30, 40 is fed to the device or a finished article leaves the device, or at the position where a transition occurs between a previous and a next article, to ensure that also the far ends of the article are pushed against the upright rim 10 and minimize the risk that the position of the elongated article 20, 30, 40 with respect to the moving direction of the transport belt would change.

A contact face 6 of the pusher which is provided to contact at least part of the second side 22 of the elongated article may comprise means for permitting displacement of the elongated article 20, 30, 40 along the pusher, in longitudinal direction of the contact face 6. To minimize energy consumption and to minimize heat built up at the contact face 6 of the pusher and the second side 22 of the elongated article, the contact face 6 of the pusher may be made in such a way that friction forces may be minimized when the elongated article is moved along the contact face 6. This may be achieved using a wide variety of technical features, which are well known to the skilled person. According to one embodiment, low friction may be achieved by having at the contact face 6 between the pusher and the elongated article a plurality of rotatable wheels 4 , in particular a row of adjacent wheels 4, wherein the tread 3 of the wheels is provided to contact the second face of the article, and the article is provided to run along the tread of the rotating wheels. In the embodiment shown in figure 1, the wheels are mounted to a carrier 23, which forms part of the pusher 5, 15, 25. According to another embodiment low friction may be achieved by the use of a sliding strip or slat made of a low friction material for example polyurethane or a polyester for example an aramid, for example Kevlar® or any other material considered suitable by the skilled person, wherein the strip or slat extends along the contact face 6 ; or by the use of a belt which is rotated around two or more running wheels, wherein the belt provides the contact face 6 of the pusher ; or by the presence of a plurality of wheels which are resiliently mounted to a support surface that extends parallel to the moving direction of the transport belt the tread of the wheels is provided to contact the second face of the article, but any other low friction contact face may be used as well.

According to an embodiment of the invention, the at least one pusher 5, 15, 25 may be moveable within the device, in the moving direction of the transport belt. According to another embodiment, the position of the at least one pusher 5, 15, 25 in longitudinal direction of the transport belt is fixed.

The position of the at least one pusher 5, 15, 25 with respect to the cross direction of the transport belt 1, may be fixed or may be variable. Thus, the at least one pusher 5, 15, 25 may be moved towards and from the upright rim 10. The presence of such a movable pusher 5, 15, 25 permits accommodating batches of articles with a different width in cross direction of the transport belt 1. Such a pusher 5, 15, 25, may be moveable between a retracted position where the contact face 6 of the pusher does not contact the elongated article 20, 30, 40, and a contact position where the contact face 6 of the pusher contacts at least part of the second side 22 of the elongated article 20, 30, 40. The width of floor planks typically varies from 5 to 25 cm or more, other elongated article may have other widths.

The device may be arranged to retract the at least one pusher 5, 15, 25 towards a partly or a fully retracted position in case the imaging data or any other sensor reveal that no elongated article has been loaded to the transport belt. It is however also possible that the at least one pusher 5, 15, 25 maintains a position which corresponds to a contact position even in case it is revealed that no elongated article has been loaded to the transport belt. The device may thus comprise a control unit which is connected with the image capturing device to receive data from the image capturing device or any other sensor on the presence of an elongated article. The control unit may be arranged to control the crosswise displacement of the at least one pusher 5, 15, 25, depending on the data received from such an image capturing and analyzing device.

Furthermore, the position of the at least one pusher 5, 15, 25 in height direction with respect to the carrying surface of the transport belt 1 may be adjustable, or in other words, the distance d in height direction of the at least one pusher 5, 15, 25 with respect to the transport belt 1 may be varied. This is of particular importance when the device is meant to process batches of elongated articles 20, 30, 40 with a different shape or thickness in height direction with respect to the transport belt 1. The thickness of wooden floor planks typically varies from 5 to 25 mm. However, the device of this invention may be used with elongated articles having a smaller or larger thickness. The position of the at least one pusher 5, 15, 25 in height direction may be individually adjustable or all together.

In the device of this invention with at least one pusher 5, 15, 25 in the contact position, the elongated article 20, 30, 40 may become clamped or tensioned between one or more pushers 5, 15, 25 and the upright rim 10. At a certain pushing force, the clamping force increases and a risk exists that the elongated article is projected upward, away from the transport belt. To counteract this, the pusher 5, 15, 25 may comprise a shielding plate 7 mounted above a profile of the upright edge of the elongated article, wherein the shielding plate 7 extends with respect to the contact face 6 towards the carrying surface 2 of the transport belt. The presence of this shielding plate 7 limits movement of the elongated article in height direction, i.e. a direction pointing away from the carrying surface of the transport belt. Of course, when in action to apply a filling material, the applicator 37 exerts a downward pressure to the article, i.e. a pressure pointing towards the carrying surface of the transport belt.

The longitudinally extending upright rim 10 forms a support edge for a first edge 21 of the elongated article 20, 30, 40 and prevents the article from moving past that support edge in cross direction of the transport belt. The upright rim therewith provides a reference line for the displacement of the elongated article 20, 30, 40. The at least one pusher 5, 15, 25 co-operates with the upright rim 10 to exert a pushing force to a second side 22 of the elongated article 20, 30, 40 which contacts the at least one pusher, to push the article against the upright rim 10 and counteract any displacement of the article 20, 30, 40 in a direction pointing away from the upright rim 10. Thus, friction is created between the contact face 11 of the upright rim and the first side 21 of the article and the article is clamped between the upright rim 10 and the pusher 5, 15, 25. This friction counteracts any displacement of the article in a direction along the upright rim 10 as well as in the moving direction of the transport belt 1. Thus, the crosswise extending clamping force ensures that the position of the elongated article may be fixed with respect to the transport belt, in cross direction of the transport belt as well as in the moving direction.

In a further preferred embodiment, the at least one pusher 5, 15, 25 is tiltable with respect to the longitudinal direction of the transport belt 1. This permits ensuring that variations in the dimensions of the article 20, 30, 40 in cross direction of the transport belt 1 may be absorbed, and that a pushing force is exerted to the second side 22 of the elongated article 20, 30, 40, even in case of articles with varying dimensions in cross direction of the moving direction.

The pushing force exerted by the at least one pusher 5, 15, 25 may be fixed or may be adaptable. In that case the pushing force may preferably be selected and adapted by the skilled person to achieve the desired fixation of the position of the elongated article, without causing any unwanted deformation of the article 20, 30, 40. Due to the pushing force exerted by the at least one pusher 5, 15, 25, there is no need for the applicator 37 to continuously exert a downward force to the article to fix its position with respect to the transport belt. In fact there is no need for a downward force by the applicator 37 to permit fixing the position of the article with respect to the transport belt.

The magnitude of the pushing force may for example be pneumatically controlled. However if so desired a magnetic force may be used as the clamping force, or an electromagnetic device may be used to achieve the desired clamping force.

When the elongated article 20, 30, 40 is pushed against the upright rim 10, a risk rises that rim 10 is compressed or deformed, as a result of which the position of the elongated article in cross direction on the transport belt risks to change and no longer corresponds to the position determined by the image capturing device. The risk to deformation of the upright rim 10 may be kept within limits by an appropriate selection of the material. Suitable materials are well known to the skilled person and include those with a small flexibility, high rigidity for example a polyester or a polyurethane or any other material considered suitable by the skilled person. The risk for deformation of the upright rim 10 may further be kept within limits by the presence of a resistance 13 on a side 12 of the upright rim 10 opposite the side 11 facing the elongated article 20, 30, 40. The resistance 13 may be positioned at a distance from the upright rim 10, but preferably it is positioned adjacent the upright rim to minimize deformation under the influence of a pushing force. The resistance 13 may have a fixed position, or its position may be adjustable in particular in cross direction of the transport belt in case the position of the upright rim 10 would be adjustable or to permit some degree of deformation.

The resistance 13 may be moveably mounted in the device, in such a way that it is moved in the moving direction of the transport belt 1. Thereby, the resistance 13 may be moveable at the same speed of the transport belt 1. Thereby, the transport belt 1 and the resistance 13 may be driven by a separate driving. According to another embodiment, the position of the resistance 13 in the device may be fixed. A contact face 14 of the resistance 13 which is provided to contact at least part of the second side 12 of the upright rim may comprise means for permitting displacement of the upright rim 10 along the resistance 13, in the moving direction of the transport belt. To minimize energy consumption by the device and to minimize heat built up at the contact face, the contact face 14 of the resistance may be made in such a way that friction forces may be minimized during the displacement of the upright rim 10 with the transport belt 1 along the resistance. This may be achieved using a wide variety of means, as has been described above in respect of the pusher 5, 15, 25.

The device of the present invention may further comprise an image capturing device 28 for identifying and determining the position of one or more artifacts 24, 34 present in the surface of the article. The image capturing device 28 is preferably positioned downstream of the insertion position 26 where the articles are positioned onto the transport belt 1. In order to ensure that the position of the article 20, 30, 40 and the artifacts 24, 34 present on the surface thereof, does not change with respect to the transport belt 1, the clamping means described above preferably extent from the image capturing position 28 where the position of the artifacts is determined and towards and past the application position 27, i.e. the position in the device where the applicator 37 acts upon the artifacts.

When in use, an article, for example a wooden plank 30 is positioned on the transport belt 1 at the insertion position 26 in such a way that a first side 21 of the plank contacts the first side of the contact rim 11. The wooden plank is transported by the transport belt 1 towards image capturing device 27. At the position of the image processing device, or at a position upstream thereof, a first pusher acts upon the second upright side 22 of the article, thereby clamping the article between the upright rim 10 and the first pusher 5. At the position of the image capturing device and the image analyzing device, the surface of the plank is analyzed; artifacts are identified and communicated to the control unit 29. The wooden plank continues to be forwarded in the clamped situation, by the transport belt 1 from the image capturing device 27 to the application position. Thereby, the plank is subjected to a clamping action by the second pusher 15 and the third pusher 25. Due to the clamping action exerted by the plurality of pushers 5, 15, 25 the position of the plank remains fixed with respect to the transport belt. In the clamped position and simultaneously with being moved through the device, one or more applicators 27 act upon the surface 24 of the plank to apply filling material to fill artifacts present therein. The position at which the filling material is applied is determined by the control unit, based on the image capturing analysis data corrected for the theoretical displacement of the plank, which correspond to the displacement of the transport belt.

The use of a continuously revolving transport belt permits operating the device in a continuous manner, i.e. permits a continuous supply of elongated articles by the transport belt to the applicator. The continuous operation permits to significantly increase the production speed.

## Claims

1. A device for treating a pre-determined part of at least one elongated wooden article (20, 30, 40), which device comprises an endless transport belt (1) which is provided to revolve in a moving direction (M) at a moving speed for moving the at least one elongated article positioned on a carrying surface (2) of the transport belt (1) from an insertion position (26) to an application position (27) in the device where the at least one article is to be treated, wherein the device comprises clamping means for fixing the position of the article (20, 30, 40) with respect to the transport belt (1) while being moved, **characterized in that** the clamping means comprise an upright rim (10) which extends in upright direction with respect to the carrying surface (2) of the transport belt along-a first side of the carrying surface (2) of the transport belt (1), **along the entire length of the transport belt,** wherein the upright rim (10) is moveable at a moving speed which corresponds to the moving speed of the transport belt (1), wherein the upright rim (10) provides a positioning member for a first side (21) of the elongated article contacting the upright rim, wherein the clamping means further comprise at least one pusher (5, 15, 25) which is provided to exert a force to at least part of a second side (22) of the elongated article opposite the first side (21) contacting the upright rim (10), which force extends in a direction pointing from the second side (22) of the elongated article towards the upright rim (10) so as to clamp the at least one (20, 30, 40) article between the at least one pusher and the upright rim (10).

2. A device according to claim 1, wherein the upright rim (10) is connected to the transport belt (1) so as to form one part with the transport belt (1).

3. A device according to claim 1 or 2, wherein the at least one pusher (5, 15,25) is provided to exert a pushing force to at least part of the second side (22) of the elongated article to push the at least one article (20, 30, 40) against the upright rim, wherein the pushing force extends crosswise of the moving direction.

4. A device according to any one of the previous claims, wherein the transport belt (1) is moveably mounted with respect to the at least one pusher (5, 15, 25) and wherein a contact face (6) of the at least one pusher which is provided to contact at least part of the second side (22) of the at least one elongated article (20, 30, 40), comprises means (9) for permitting displacement of the at least one article (20, 30, 40) along the at least one pusher, in the moving direction at low friction.

5. A device according to claim 4, wherein the contact face (6) of the at least one pusher provided to contact at least part of the second side (22) of the elongated article (20, 30, 40), comprises a plurality of rotating wheels (4) mounted to the pusher, wherein the wheels (4) are arranged in a row which extends in the moving direction, wherein the wheels (4) are provided to rotate around an axis substantially perpendicular to the moving direction, wherein each of the said wheels has a tread (9) which provides a running surface for the at least one article (20, 30, 40) when being moved on the carrying surface (2) of the transport belt (1).

6. A device according to any one of the previous claims, wherein the at least one pusher (5, 15, 25) is moveable in cross direction of the moving direction of the transport belt (1), between a retracted position where the at least one pusher (5, 15, 25) does not contact the at least one elongated article (20, 30, 40), and a contact position where the contact face (6) of the at least one pusher contacts at least part of the second side (22) of the at least one elongated article (20, 30, 40).

7. A device according to any one of the previous claims, wherein the clamping means comprise a plurality of consecutive pushers (5, 15, and 25) adjacently positioned in the moving direction.

8. A device according to any one of the previous claims, wherein the at least one pusher (5, 15, 25) is tiltable with respect to the moving direction.

9. A device according to any one of the previous claims, wherein the device comprises at a position downstream of the insertion position an image capturing position, wherein the clamping means (10, 5, 15, 25) extend from the image capturing position (28) to the application position (27).

10. A device according to the previous claim, further comprising at the image capturing position an image capturing device (28) for determining the shape and position of one or more artifacts (24, 34) on the upper face (31) of the elongated article, which image capturing device is connected to a control unit (29) provided to receive data from the image capturing device on the position and shape of the artifacts and for controlling application of a filling agent to the artifacts by at least one applicator (37) mounted at the application position (27) downstream of the image capturing device.

11. A device according to any one of the previous claims, wherein the position of the at least one pusher (5, 15, 25) is adjustable in height direction with respect to the carrying surface of the transport belt (1).

12. A device according to any one of the previous claims, wherein on a second side of the upright rim (12) opposite the first side (11) facing the at least one elongated article (20, 30, 40), a resistance (13) is mounted which is provided to contact at least part of the second side of the upright rim (12) to counteract deformation and/or displacement of the upright rim (10) in a direction along the direction of the clamping force (C), and wherein the upright rim (10) is provided to be moveable with respect to the resistance (13) at low friction.

13. A device according to the previous claim, wherein a face of the resistance contacting the upright rim (14) comprises a plurality of rotating wheels (16) arranged in a row which extends in the moving direction, wherein the wheels are provided to rotate in the moving direction, around an axis substantially perpendicular to the moving direction.

14. A device according to any one of the previous claims, wherein a top face of the at least one pusher (17) extends with respect to at least part of the face (6) of the pusher contacting a profiled upright second side (22) of the at least one elongated article, to counteract displacement of the elongated article (20, 30, 40) in a direction pointing away from the carrying surface (2) of the transport belt.

15. A device according to claims 10 and 14, wherein the at least one applicator (37) has a contact face which is provided to contact the upper face (31) of the at least one elongated article, which applicator is provided to exert a pushing force to the upper face (31) in downward direction towards the carrying surface (2) of the transport belt (1).

16. A device according to any one of the previous claims for filling and repairing artifacts occurring in the surface of an elongated wooden article, preferably a wooden floor plank.

## Patentansprüche

1. Vorrichtung zur Behandlung eines vorbestimmten Teils von mindestens einem länglichen **hölzernen** Gegenstand (20, 30, 40), welche Vorrichtung ein Endlosförderband (1) umfasst, das bereitgestellt ist zum Umlaufen in einer Bewegungsrichtung (M) mit einer Bewegungsgeschwindigkeit, um den mindestens einen länglichen Gegenstand, positioniert auf einer Trägeroberfläche (2) des Förderbandes (1) von einer Einfügeposition (26) zu einer Applikationsposition (27) in der Vorrichtung zu bewegen, wo der mindestens eine Gegenstand behandelt werden soll, wobei die Vorrichtung Klemmmittel umfasst, um die Position des Gegenstands (20, 30, 40) in Bezug auf das Förderband (1) während der Bewegung zu fixieren, **dadurch gekennzeichnet, dass** die Klemmmittel einen aufrechten Rand (10) umfassen, der in Aufrechtrichtung in Bezug auf die Trägeroberfläche (2) des Förderbandes entlang einer ersten Seite der Trägeroberfläche (2) des Förderbandes (1) entlang der ganzen Länge des Förderbandes_verläuft, wobei der aufrechte Rand (10) mit einer Bewegungsgeschwindigkeit beweglich ist, die der Bewegungsgeschwindigkeit des Förderbandes (1) entspricht, wobei der aufrechte Rand (10) ein Positionierungselement für eine erste Seite (21) des länglichen Gegenstands, die den aufrechten Rand berührt, bereitstellt, wobei die Klemmmittel ferner mindestens einen Drücker (5, 15, 25) umfassen, der bereitgestellt ist, um eine Kraft auf mindestens einen Teil einer zweiten Seite (22) des länglichen Gegenstands gegenüber der ersten Seite (21), die den aufrechten Rand (10) berührt, auszuüben, welche Kraft in einer Richtung verläuft, die von der zweiten Seite (22) des länglichen Gegenstands zu dem aufrechten Rand (10) zeigt, um den mindestens einen (20, 30, 40) Gegenstand zwischen dem mindestens einen Drücker und dem aufrechten Rand (10) festzuklemmen.

2. Vorrichtung nach Anspruch 1, wobei der aufrechte Rand (10) mit dem Förderband (1) verbunden ist, um ein einziges Teil mit dem Förderband (1) zu bilden.

3. Vorrichtung nach Anspruch 1 oder 2, wobei der mindestens eine Drücker (5, 15, 25) bereitgestellt ist, um eine Drückkraft auf mindestens einen Teil der zweiten Seite (22) des länglichen Gegenstands auszuüben, um den mindestens einen Gegenstand (20, 30, 40) gegen den aufrechten Rand zu drücken, wobei die Drückkraft quer zu der Bewegungsrichtung verläuft.

4. Vorrichtung nach einem der vorhergehenden Ansprüche, wobei das Förderband (1) beweglich in Bezug auf den mindestens einen Drücker (5, 15, 25) montiert ist und wobei eine Kontaktfläche (6) des mindestens einen Drückers, die bereitgestellt ist, um mindestens einen Teil der zweiten Seite (22) des mindestens einen länglichen Gegenstands (20, 30, 40) zu berühren, Mittel (9) umfasst, um die Verschiebung des mindestens einen Gegenstands (20, 30, 40) entlang des mindestens einen Drückers in die Bewegungsrichtung bei geringer Reibung zu erlauben.

5. Vorrichtung nach Anspruch 4, wobei die Kontaktfläche (6) des mindestens einen Drückers, bereitgestellt zum Berühren von mindestens einem Teil der zweiten Seite (22) des länglichen Gegenstands (20, 30, 40) eine Vielzahl von drehenden Rädern (4) umfasst, die auf dem Drücker montiert sind, wobei die Räder (4) bereitgestellt sind, um sich um eine Achse zu drehen, die im Wesentlichen senkrecht zu der Bewegungsrichtung ist, wobei jedes der Räder eine Lauffläche hat, die eine Laufoberfläche für den mindestens einen Gegenstand (20, 30, 40) bereitstellt, wenn dieser auf der Trägeroberfläche (2) des Förderbandes (1) bewegt wird.

6. Vorrichtung nach einem der vorhergehenden Ansprüche, wobei der mindestens eine Drücker (5, 15, 25) in Querrichtung von der Bewegungsrichtung des Förderbandes (1) zwischen einer zurückgezogenen Position, in welcher der mindestens eine Drücker (5, 15, 25) den mindestens einen länglichen Gegenstand (20, 30, 40) nicht berührt, und einer Kontaktposition, in welcher die Kontaktfläche (6) des mindestens einen Drückers mindestens einen Teil der zweiten Seite (22) des mindestens einen länglichen Gegenstands (20, 30, 40) berührt, beweglich ist.

7. Vorrichtung nach einem der vorhergehenden Ansprüche, wobei die Klemmmittel eine Vielzahl aufeinanderfolgender Drücker (5, 15 und 25) umfasst, die nebeneinander in Bewegungsrichtung positioniert sind.

8. Vorrichtung nach einem der vorhergehenden Ansprüche, wobei der mindestens eine Drücker (5, 15, 25) in Bezug auf die Bewegungsrichtung geneigt werden kann.

9. Vorrichtung nach einem der vorhergehenden Ansprüche, wobei die Vorrichtung eine Position stromabwärts von der Einfügeposition einer Bilderfassungsposition umfasst, wobei die Klemmmitel (10, 5, 15, 25) von der Bilderfassungsposition (28) zu der Applikationsposition (27) verlaufen.

10. Vorrichtung nach dem vorhergehenden Anspruch, ferner umfassend an der Bilderfassungsposition eine Bilderfassungsvorrichtung (28) zur Bestimmung der Form und Position von einem oder mehreren Artefakten (24, 34) an der oberen Seite (31) des länglichen Gegenstands, welche Bilderfassungsvorrichtung mit einer Steuereinheit (29) verbunden ist, die bereitgestellt ist, um Daten von der Bilderfassungsvorrichtung über die Position und Form der Artefakte zu empfangen und um die Applikation eines Füllstoffs auf die Artefakte durch mindestens einen Applikator (37), montiert an der Applikationsposition (27) stromabwärts von der Bilderfassungsvorrichtung, zu steuern.

11. Vorrichtung nach einem der vorhergehenden Ansprüche, wobei die Position des mindestens einen Drückers (5, 15, 26) höhenverstellbar in Bezug auf die Trägeroberfläche des Förderbandes (1) ist.

12. Vorrichtung nach einem der vorhergehenden Ansprüche, wobei an einer zweiten Seite des aufrechten Randes (12) gegenüber der ersten Seite (11), gerichtet zu dem mindestens einen länglichen Gegenstand (20, 30,40), ein Widerstand (13) montiert ist, der bereitgestellt ist, um mindestens einen Teil der zweiten Seite des aufrechten Randes (12) zu berühren, um Verformung und/oder Verschiebung des aufrechten Randes (10) in eine Richtung entlang der Richtung der Klemmkraft (C) entgegenzuwirken, und wobei der aufrechte Rand (10) bereitgestellt ist, um in Bezug auf den Widerstand (13) mit geringer Reibung beweglich zu sein.

13. Vorrichtung nach dem vorhergehenden Anspruch, wobei eine Fläche des Widerstands, die den aufrechten Rand (14) berührt, eine Vielahl von drehenden Rädern (16) umfasst, angeordnet in einer Reihe, die in Bewegungsrichtung verläuft, wobei die Räder bereitgestellt sind, um sich in Bewegungsrichtung um eine Achse, die im Wesentlichen senkrecht zu der Bewegungsrichtung ist, zu drehen.

14. Vorrichtung nach einem der vorhergehenden Ansprüche, wobei eine obere Fläche des mindestens einen Drückers (17) in Bezug auf mindestens einen Teil der Fläche (6) des Drückers, die eine profilierte aufrechte zweite Seite (22) des mindestens einen länglichen Gegenstands berührt, verläuft, um Verschiebung des länglichen Gegenstands (20, 30, 40) in eine Richtung, die von der Trägerfläche (2) des Förderbandes weg zeigt, entgegenzuwirken.

15. Vorrichtung nach den Ansprüchen 10 und 14, wobei der mindestens eine Applikator (37) eine Kontaktfläche hat, die bereitgestellt ist, um die obere Fläche (31) des mindestens einen länglichen Gegenstands zu berühren, welcher Applikator bereitgestellt ist, um eine Drückkraft auf die obere Fläche (31) in Abwärtsrichtung zu der Trägeroberfläche (2) des Förderbandes (1) auszuüben.

16. Vorrichtung nach einem der vorhergehenden Ansprüche zum Füllen und Reparieren von Artefakten, die in der Oberfläche eine länglichen hölzernen Gegenstands, bevorzugt einer hölzernen Fußbodendiele, vorkommt.

## Revendications

1. Dispositif pour traiter une partie prédéterminée d'au moins un article en bois allongé (20, 30, 40), lequel dispositif comprend une courroie de transport sans fin (1) qui est prévue pour tourner dans une direction de déplacement (M) à une vitesse de déplacement pour déplacer le au moins un article allongé positionné sur une surface de support (2) de la courroie de transport (1) depuis une position d'insertion (26) jusqu'à une position d'application (27) dans le dispositif où le au moins un article est à traiter, dans lequel le dispositif comprend des moyens de serrage pour fixer la position de l'article (20, 30, 40) par rapport à la courroie de transport (1) tout en étant déplacé, **caractérisé en ce que** les moyens de serrage comprennent un rebord vertical (10) qui s'étend dans une direction verticale par rapport à la surface de support (2) de la courroie de transport le long d'un premier côté de la surface de support (2) de la courroie de transport (1), **sur la longueur entière de la courroie de transport,** dans lequel le rebord vertical (10) peut être déplacé à une vitesse de déplacement qui correspond à la vitesse de déplacement de la courroie de transport (1), dans lequel le rebord vertical (10) fournit un élément de positionnement pour un premier côté (21) de l'article allongé qui vient au contact du rebord vertical, dans lequel les moyens de serrage comprennent en outre au moins un poussoir (5, 15 , 25) qui est prévu pour exercer une force sur au moins une partie d'un second côté (22) de l'objet allongé opposé au premier côté (21) en contact avec le rebord vertical (10), laquelle force s'étend dans une direction pointant du second côté (22) de l'article allongé vers le rebord vertical (10) de manière à serrer le au moins un article (20, 30, 40) entre le au moins un poussoir et le rebord vertical (10).

2. Dispositif selon la revendication 1, dans lequel le rebord vertical (10) est relié à la courroie de transport (1) de manière à former une partie avec la courroie de transport (1).

3. Dispositif selon la revendication 1 ou 2, dans lequel le au moins un poussoir (5, 15, 25) est prévu pour exercer une force de poussée sur au moins une partie du second côté (22) de l'article allongé pour pousser le au moins un article (20, 30, 40) contre le rebord vertical, dans lequel la force de poussée s'étend en travers de la direction de déplacement.

4. Dispositif selon l'une quelconque des revendications précédentes, dans lequel la courroie de transport (1) est montée de manière mobile par rapport au au moins un poussoir (5, 15, 25) et dans lequel une face de contact (6) du au moins un poussoir qui est prévu pour venir au contact d'au moins une partie du second côté (22) du au moins un article allongé (20, 30, 40), comprend des moyens (9) pour permettre le déplacement du au moins un article (20, 30, 40) le long du au moins un poussoir, dans la direction de déplacement avec un faible frottement.

5. Dispositif selon la revendication 4, dans lequel la face de contact (6) du au moins un poussoir prévu pour venir au contact d'au moins une partie du second côté (22) de l'article allongé (20, 30, 40), comprend une pluralité de roues rotatives (4) montées sur le poussoir, les roues (4) étant agencées dans une rangée qui s'étend dans la direction de déplacement, dans lequel les roues (4) sont prévues pour tourner autour d'un axe sensiblement perpendiculaire à la direction de déplacement, dans lequel chacune desdites roues a une bande de roulement (9) qui fournit une surface de passage pour le au moins un article (20, 30, 40) lorsqu'il est déplacé sur la surface de support (2) de la courroie de transport (1).

6. Dispositif selon l'une quelconque des revendications précédentes, dans lequel le au moins un poussoir (5, 15, 25) est mobile dans une direction transversale à la direction de déplacement de la courroie de transport (1), entre une position rétractée où le au moins un poussoir (5, 15, 25) ne vient pas au contact du au moins un article allongé (20, 30, 40), et une position de contact où la face de contact (6) du au moins un poussoir est en contact avec au moins une partie du second côté (22) du au moins un article allongé (20, 30, 40).

7. Dispositif selon l'une quelconque des revendications précédentes, dans lequel les moyens de serrage comprennent une pluralité de poussoirs consécutifs (5, 15 et 25) positionnés de manière adjacente dans la direction de déplacement.

8. Dispositif selon l'une quelconque des revendications précédentes, dans lequel le au moins un poussoir (5, 15, 25) peut être incliné par rapport à la direction de déplacement.

9. Dispositif selon l'une quelconque des revendications précédentes, dans lequel le dispositif comprend à une position en aval de la position d'insertion une position de capture d'image, dans lequel les moyens de serrage (10, 5, 15, 25) s'étendent de la position de capture d'image (28) jusqu'à la position d'application (27).

10. Dispositif selon la revendication précédente, comprenant en outre à la position de capture d'image un dispositif de capture d'image (28) pour déterminer la forme et la position d'un ou plusieurs artefacts (24, 34) sur la face supérieure (31) de l'article allongé, lequel dispositif de capture d'image est connecté à une unité de commande (29) conçue pour recevoir des données du dispositif de capture d'image sur la position et la forme des artefacts et pour commander l'application d'un agent de remplissage dans les artefacts par au moins un applicateur (37) monté au niveau de la position d'application (27) en aval du dispositif de capture d'image.

11. Dispositif selon l'une quelconque des revendications précédentes, dans lequel la position du au moins un poussoir (5, 15, 25) est réglable dans la direction de la hauteur par rapport à la surface de support de la courroie de transport (1).

12. Dispositif selon l'une quelconque des revendications précédentes, dans lequel, sur un second côté du rebord vertical (12) opposé au premier côté (11) faisant face au au moins un article allongé (20, 30, 40), un élément de résistance (13) est monté qui est prévu pour venir au contact d'au moins une partie du second côté du rebord vertical (12) pour contrecarrer une déformation et/ou un déplacement du rebord vertical (10) dans une direction le long de la direction de la force de serrage (C), et dans lequel le rebord vertical (10) est prévu pour être mobile par rapport à l'élément de résistance (13) avec un faible frottement.

13. Dispositif selon la revendication précédente, dans lequel une face de l'élément de résistance en contact avec le rebord vertical (14) comprend une pluralité de roues rotatives (16) agencées dans une rangée qui s'étend dans la direction de déplacement, dans lequel les roues sont prévues pour tourner dans la direction de déplacement, autour d'un axe sensiblement perpendiculaire à la direction de déplacement.

14. Dispositif selon l'une quelconque des revendications précédentes, dans lequel une face supérieure du au moins un poussoir (17) s'étend par rapport à au moins une partie de la face (6) du poussoir en contact avec un second côté vertical profilé (22) du au moins un article allongé, pour contrecarrer un déplacement de l'article allongé (20, 30, 40) dans une direction pointant à l'opposé de la surface de support (2) de la courroie de transport.

15. Dispositif selon les revendications 10 et 14, dans lequel le au moins un applicateur (37) a une face de contact qui est prévue pour venir au contact de la face supérieure (31) du au moins un article allongé, lequel applicateur est prévu pour exercer une force de poussée sur la face supérieure (31) vers le bas en direction de la surface de support (2) de la courroie de transport (1).

16. Dispositif selon l'une quelconque des revendications précédentes pour le remplissage et la réparation d'artefacts apparaissant dans la surface d'un article en bois allongé, de préférence une planche de plancher en bois.
